# FASCICULE DE BREVET EUROPEEN

(11) **EP 0 576 362 B1**
(45) Date de publication et mention de la délivrance du brevet: **18.08.1999**
(21) Numéro de dépôt: 93401624.7
(22) Date de dépôt: 24.06.1993
(51) Int. Cl.: C03C 3/091

(54) **Verres thermiquement stables et chimiquement résistants**
Thermisch stabile und chemisch widerstandsfähige Gläser
Thermally stable und chemically resistant glasses

(30) Priorité: 25.06.1992 FR 9207778
(43) Date de publication de la demande: 29.12.1993
(73) Titulaire: SAINT-GOBAIN VITRAGE, 92400 Courbevoie (FR)
(72) Inventeur: Ponthieu, Christine, F-75014 Paris (FR)
(74) Mandataire: Breton, Jean-Claude

(56) Documents cités:
- EP-A- 0 316 089
- EP-A- 0 526 272
- FR-A- 2 675 795
- CHEMICAL ABSTRACTS, vol. 117, no. 22, 30 Novembre 1992, Columbus, Ohio, US; abstract no. 218471k, page 407 ; & JP-A-4 160 030 (HOYA CORP.) 3 Juin 1992
- CHEMICAL ABSTRACTS, vol. 117, no. 18, 2 Novembre 1992, Columbus, Ohio, US; abstract no. 176879s, page 345 ; & JP-A-4 175 242 (ASAHI GLASS CO., LTD.) 23 Juin 1992

## Description

La présente invention concerne des compositions de verre qui possèdent tout à la fois une température inférieure de recuisson élevée, un faible coefficient de dilatation et une bonne résistance chimique.

Les verres selon l'invention sont intéressants pour toutes les applications requérant de telles propriétés.

Ainsi, ils sont susceptibles d'être utilisés dans l'industrie de la gobeleterie pour la fabrication de flacons à usage pharmaceutique ou de biberons.

Les verres selon l'invention sont également susceptibles d'être transformés en feuilles qui, découpées au format désiré, éventuellement polies ou traitées, vont servir d'éléments pour la réalisation de vitrages anti-feu ou de substrats sur lesquels seront déposées des couches électriquement actives. Ces substrats ainsi revêtus de couches sont généralement appelés dalles dans l'industrie électronique. Ces dalles sont associées pour former des écrans de visualisation tels que les écrans à cristaux liquides, à plasma ou électroluminescents.

Les verres connus pour leur grande stabilité physique lors d'une élévation de température, jointe à une bonne résistance chimique, sont nombreux et appartiennent généralement à la grande famille des verres borosilicatés, en particulier des verres alumino-borosilicatés comprenant des oxydes alcalino-terreux.

Les verres, transformés en feuilles puis découpés pour servir ultérieurement de substrats, sont sélectionnés notamment en fonction des propriétés physico-chimiques que ces derniers doivent posséder. En effet, le dépôt de couches électriquement actives sur un substrat de verre est obtenu à l'issue de plusieurs opérations au cours desquelles le verre a été soumis à des températures relativement élevées. Le verre ne doit pas se déformer au cours de ces opérations et donc présenter la température inférieure de recuisson (strain point) la plus élevée possible. De plus, le coefficient de dilatation thermique du verre formant le substrat doit être compatible avec celui des couches qui sont déposées à sa surface. Enfin, le verre ne doit pratiquement pas comporter d'éléments susceptibles de migrer dans les couches formées et de détériorer leurs propriétés ; c'est le cas, en particulier, des alcalins.

Ces verres doivent présenter aussi des caractéristiques de viscosité et de dévitrification adaptées au procédé choisi pour obtenir une feuille de verre dont l'épaisseur soit la plus uniforme et la surface la plus régulière possible.

Ces verres doivent également présenter une bonne résistance chimique à l'égard des milieux acides, notamment vis-à-vis de solutions à base d'acide fluorhydrique.

Un des procédés utilisables consiste à amener le verre fondu dans un dispositif dont le sommet des parois latérales, qui convergent vers le bas, sert de déversoir. Le verre s'écoule le long des parois latérales, formant ainsi deux courants qui se réunissent à la pointe du dispositif, avant d'être étirés verticalement de haut en bas sous la forme d'une feuille plane. Un tel procédé exige que le verre présente, à la température du liquidus, une viscosité égale à au moins 2 à 3.10⁵ poises. De tels verres sont, par exemple, illustrés par le brevet US-A-4 824 808.

Un autre procédé consiste à napper le verre fondu sur un bain d'étain métallique selon la technique bien connue du verre flotté. Des compositions de verre, susceptibles d'être flottées et destinées à servir de substrats pour former des écrans plats, sont notamment décrites dans la demande de brevet WO 89/02877.

Ces verres appartiennent à la famille des alumino-borosilicates comprenant une forte teneur en oxydes alcalino-terreux. Si ces verres possèdent de bonnes caractéristiques physico-chimiques eu égard à l'application considérée, leur composition contient un pourcentage élevé d'oxydes onéreux comme B₂O₃, SrO et BaO. De plus, ils sont relativement visqueux pour le procédé de verre flotté si l'on en juge d'après les exemples illustrant cette invention. En effet, la température correspondant à log η = 4 est égale ou supérieure à 1150°C, voire même à 1200°C. A titre de rappel, la température correspondant à la même viscosité pour un verre flotté ordinaire (verre silico-sodo-calcique) est comprise entre 1000 et 1050°C.

D'autres verres, susceptibles également d'être formés par la technique du verre flotté, sont décrits, dans la demande de brevet déposée en FRANCE le 2 juillet 1991, sous le numéro 91.08201.

Ces verres se caractérisent notamment par une faible viscosité aux températures élevées (la température de ces verres correspondant à log η = 3,5 est généralement inférieure à 1180°C) et par une vitesse maximale de dévitrification très faible. Cette dernière caractéristique permet d'éviter l'apparition de cristaux pendant le formage du verre malgré des températures de liquidus susceptibles d'atteindre 1230°C.

L'invention a pour objet des compositions de verre susceptibles d'être flottées qui présentent les caractéristiques physico-chimiques exigées pour les vitrages anti-feu ou pour les substrats d'écrans à matrice active et qui sont économiquement intéressantes.

L'invention a notamment pour objet des compositions de verre dépourvues d'oxyde de zinc, qui se nappent à la surface du bain d'étain à des températures particulièrement basses, la température de liquidus de ces verres demeurant inférieure à leur température correspondant à la viscosité caractéristique de log η = 3,5.

L'invention a également pour objet des compositions de verre comprenant une quantité limitée de constituants onéreux.

L'invention a aussi pour objet des compositions de verre susceptibles de permettre l'obtention d'emballages résistant en particulier aux chocs thermiques.

Ces buts sont atteints grâce à des compositions de verre qui comprennent les constituants suivants dans les limites définies ci-après et exprimées en pourcentages cationiques :

| | |
|---|---|
| SiO₂ | 46 à 56 % |
| Al₂O₃ | 12 à 17 % |
| B₂O₃ | 10 à 23 % |
| CaO | 9 à 15 % |
| MgO | 0,5 à à 4 % |
| SrO | 2 à 7 % |
| BaO | 0 à 4 % |
| Na₂O + K₂O | ≤ 0,5 % |
| TiO₂ | 0 à 3 % |

SiO₂ est l'un des oxydes qui forment le réseau vitreux des verres selon l'invention et joue un rôle essentiel pour leur stabilité. Dans le contexte de l'invention, lorsque le pourcentage cationique de ce constituant est inférieur à 46 %, la résistance chimique du verre ne peut être maintenue qu'en augmentant le pourcentage de B₂O₃, donc peu souhaitable économiquement parlant. Lorsque le pourcentage cationique de silice dépasse 56 %, la fusion du mélange vitrifiable devient difficile et la viscosité du verre augmente rendant malaisés son affinage et son nappage sur le bain d'étain.

B₂O₃ joue également un rôle essentiel pour la stabilité des verres selon l'invention. Ce constituant améliore la résistance chimique des verres selon l'invention, il diminue leur viscosité aux températures élevées ainsi que la température de fusion du mélange vitrifiable. B₂O₃ diminue également l'aptitude du verre à dévitrifier. Au-delà de 23 %, cette influence de B₂O₃ décroît ; de plus, une teneur élevée en B₂O₃ a pour effet de diminuer la température inférieure de recuisson. Au-dessous de 10 % la dévitrification du verre s'accentue et sa viscosité augmente.

L'alumine joue également un rôle de stabilisant. Ce constituant augmente la température inférieure de recuisson et, dans une certaine mesure, la résistance chimique du verre. Au-dessous de 12 % cette résistance devient trop faible ; au-dessus de 17 %, les verres sont plus difficiles à fondre et leur viscosité aux températures élevées augmente de façon trop importante ; de surcroît, leur résistance chimique diminue de manière indésirable.

Les oxydes alcalino-terreux jouent également un rôle très important dans les verres selon l'invention : ils favorisent leur fusion et diminuent leur viscosité aux températures élevées.

Parmi ces oxydes CaO joue un rôle important. Contrairement à de nombreux constituants dont l'influence sur la courbe de viscosité se traduit pratiquement par une translation de ladite courbe vers des températures plus élevées ou plus faibles selon le cas, la chaux, dans le cadre de l'invention, a pour effet de provoquer un redressement de la courbe de viscosité. L'écart séparant les températures correspondant à deux viscosités déterminées est plus faible pour les verres selon l'invention que celui présenté par un verre silico-sodo-calcique ordinaire.

Ce phénomène a pour effet de maintenir, voire d'augmenter la température inférieure de recuisson, de faciliter la fusion du mélange vitrifiable et l'affinage du verre obtenu et de diminuer la température à laquelle le verre peut être nappé à la surface du bain d'étain. Pour obtenir un redressement notable de la courbe de viscosité, une teneur en CaO de l'ordre de 9 % est nécessaire. Au-delà de 15 %, CaO augmente le coefficient de dilatation dans des proportions inacceptables. Autre avantage : les verres selon l'invention relativement riches en CaO sont d'un coût modéré du fait que ce constituant provient de matières premières bon marché. Cet avantage économique est d'autant plus marqué pour les verres les plus riches en CaO et dont la teneur en B₂O₃ est réduite.

Les verres selon l'invention comprennent systématiquement de la magnésie car ce constituant permet d'augmenter la résistance chimique des verres et de diminuer leur coefficient de dilatation ; il permet également, de diminuer leur viscosité aux températures élevées. La teneur supérieure de MgO est limitée à 4 % car, au-delà, cet oxyde accentue la tendance à la dévitrification des verres selon l'invention.

L'introduction de SrO et éventuellement de BaO contribue à la diminution de la viscosité des verres aux températures élevées. Ces oxydes permettent aussi de réduire les risques de dévitrification.

Dans le cadre des verres selon l'invention, SrO a pour effet de redresser la courbe de viscosité, mais à un degré moindre que CaO. SrO peut être introduit jusqu'à une teneur, exprimée en pourcentage cationique, de l'ordre de 7 % sans provoquer une augmentation trop importante du coefficient de dilatation. BaO peut être éventuellement introduit dans les verres d'après l'invention, mais selon des teneurs relativement faibles. En effet si cet oxyde diminue la viscosité, il n'a pas d'influence sur la pente de la courbe de viscosité, il augmente assez sensiblement le coefficient de dilatation et les matières premières qui l'amènent sont chères.

Les verres selon l'invention peuvent comprendre également d'autres constituants en quantité limitée comme TiO₂, qui a pour effet notamment d'augmenter la résistance chimique.

Afin d'éviter le phénomène de migration d'éléments dans la couche recouvrant la surface d'un substrat constitué d'une feuille de verre, les verres selon l'invention comprennent très peu, voire pas du tout, d'oxydes alcalins. La teneur maximale des alcalins dans ces verres est d'environ 0,5 % exprimée en pourcentage cationique.

Grâce à l'action conjointe des différents constituants décrite précédemment, les compositions selon l'invention sont facilement fusibles et les verres obtenus possèdent des propriétés les rendant particulièrement aptes au flottage sur un bain d'étain.

Ces avantages peuvent être quantifiés en prenant en considération l'écart mesuré entre deux températures correspondant à deux viscosités déterminées telles que log η = 4,5 et log η = 2,5. Cet écart pour un verre silico-sodo-calcique classique est supérieur à 330°C ; le même écart pour les verres selon l'invention est inférieur à 330°C et, pour les compositions préférées, inférieur à 300°C.

Les compositions de l'invention sont relativement faciles à fondre et les verres obtenus faciles à affiner par rapport à des verres mis au point pour la même application. Cela se traduit par une consommation d'énergie réduite et par une usure moins rapide des réfractaires constituant le four de fusion.

Les verres selon l'invention présentent généralement une température correspondant à log η = 4 qui est égale ou inférieure à environ 1140°C. Cette caractéristique est importante dans la mesure où la pression de vapeur saturante de l'étain devient non négligeable à partir de 1200°C et croît rapidement à des températures plus élevées. Enfin, les verres selon l'invention présentent une température correspondant à log η = 3,5 qui est supérieure à leur température de liquidus. Cela permet d'écarter les risques de dévitrification pendant le formage du verre.

Les verres de l'invention présentent généralement une température inférieure de recuisson supérieure à 610°C, un coefficient de dilatation inférieur à 50.10⁻⁷/°C et une bonne résistance à l'attaque d'une solution fluorhydrique.

Les avantages présentés par les verres selon l'invention seront mieux appréciés à travers les quelques exemples figurant dans le tableau en annexe.

Les exemples 1 à 8 illustrent les verres selon l'invention ; l'exemple 9 est un contre-exemple montrant l'influence de la teneur en CaO sur l'écart séparant les températures correspondant à log η = 4,5 et log η = 2,5.

Les caractéristiques thermiques, la dévitrification et la viscosité des verres illustrant l'invention ont été mesurées selon les méthodes bien connues de l'homme de l'art. Leur résistance chimique a été appréciée en mesurant la perte de poids subie par une plaquette de verre de 15x30x6 millimètres, polie sur les deux faces, après son séjour dans une solution acide. Cette perte est exprimée en mg/cm². La résistance à l'acide fluorhydrique (R_{HF}) est mesurée après un séjour de 7 heures, à température ambiante, dans une solution aqueuse d'acide fluorhydrique et de fluorure d'ammonium. Cette solution d'attaque est formée d'une solution à 50 % d'acide fluorhydrique et d'une solution à 40 % de fluorure d'ammonium mélangées dans un rapport pondéral de 1 à 7.

Les verres selon l'invention sont élaborés à partir de matières premières vitrifiables, dont certaines sont naturelles et qui doivent présenter le moins d'impuretés possible.

Les compositions de verre préférées selon l'invention, se distinguent par les caractéristiques suivantes considérées seules ou en combinaison :

| | |
|---|---|
| SiO₂ + Al₂O₃ | ≤ 65 % |
| 10 % < CaO | ≤ 14 % |
| SrO + BaO | ≤ 4 % |
| Na₂O | < 0,2 % |

Par la technique du verre flotté, les verres selon l'invention sont obtenus sous la forme d'un ruban d'épaisseur strictement contrôlée.

Ces feuilles découpées au format désiré, éventuellement polies et traitées, sont montées pour former des vitrages anti-feu ou servir de substrat pour fabriquer des dalles.

Les verres selon l'invention se caractérisant par une température inférieure de recuisson supérieure à 600°C et par un coefficient de dilation inférieur à 50.10⁻⁷°C donnent des feuilles de verre convenant à la réalisation de vitrages anti-feu. Sous forme de substrat, les verres selon l'invention peuvent être recouverts de couches à base notamment de Si, SiOₓ, d'oxydes d'indium et d'étain (ITO) ou de métaux, afin de réaliser un fin réseau de transistors en films minces.

Ils peuvent être également recouverts de différentes couches permettant la réalisation de filtres colorés ; ainsi, par exemple, ils peuvent être recouvert d'un film de Cr ou NiCr, qui est ensuite gravé par photolithographie. Un pavage de couleurs (rouge, vert, bleu) est ensuite réalisé par dépôt de couleurs et photolithogravure. Le tout est recouvert d'une couche de polyimide puis d'ITO.

Ils peuvent être recouverts d'une série de couches dont au moins l'une d'entre elles devient luminescente sous l'effet d'une décharge électrique.

Les dalles ainsi obtenues sont associées pour former des écrans de visualisation tels que les écrans à cristaux liquides, à plasma ou électroluminescents.

Les verres selon l'invention permettent d'obtenir des emballages, tels que des flacons ou des biberons, dont l'usage nécessite une bonne résistance aux chocs thermiques et une grande inertie chimique à l'égard des produits qu'ils sont susceptibles de contenir. Ces emballages sont obtenus par la technique bien connue de soufflage ou de pressage d'une paraison dans un moule.

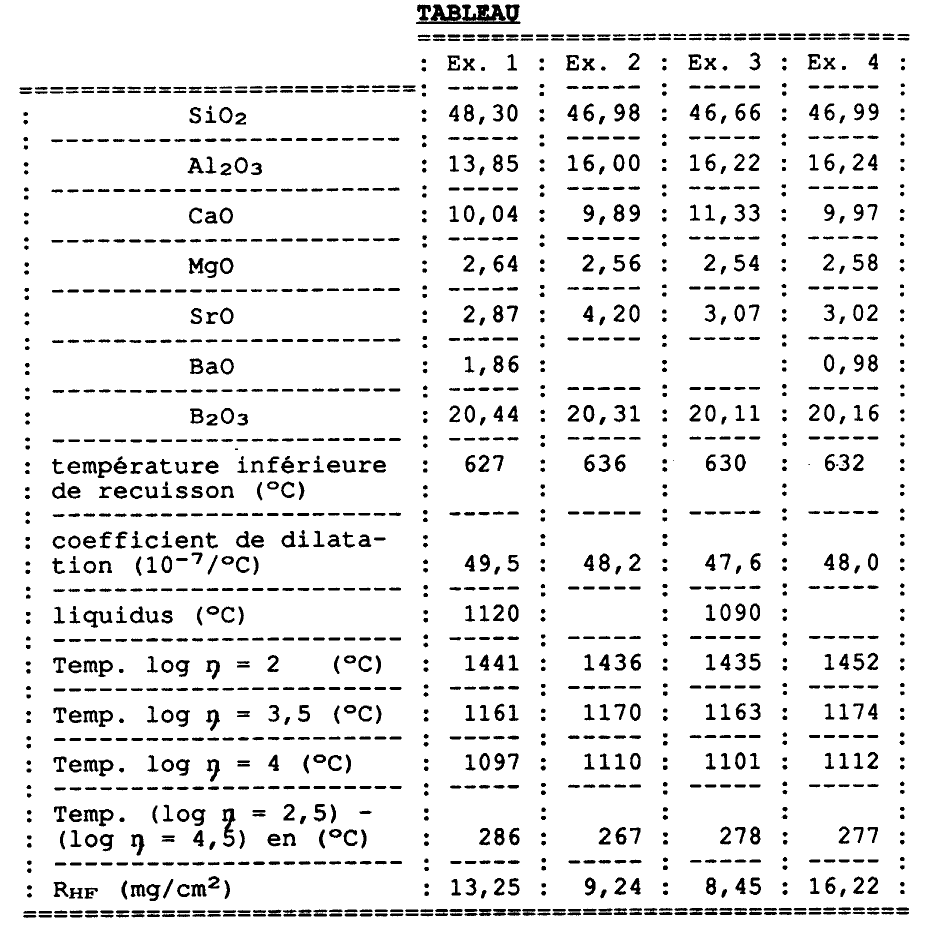

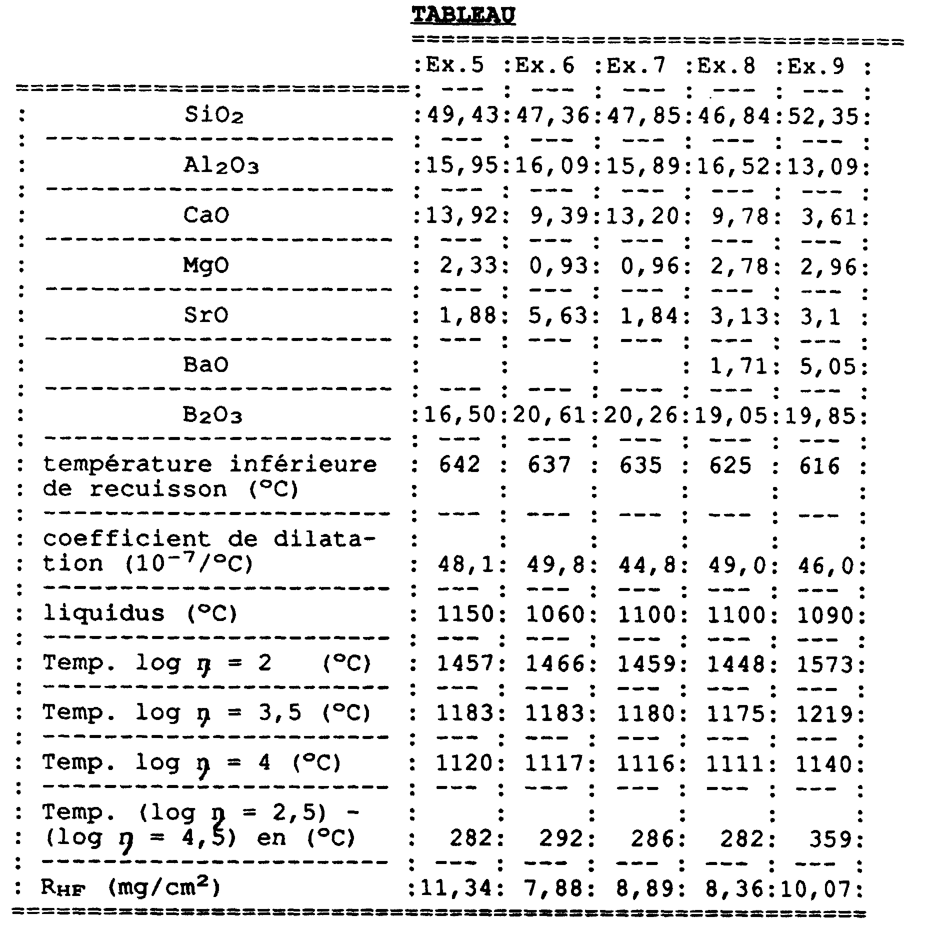

## Revendications

1. Composition de verre thermiquement stable et chimiquement résistante, ***caractérisée en ce qu'***elle comprend les constituants suivants, dans les limites ci-après exprimées en pourcentages cationiques :
| | |
|---|---|
| SiO₂ | 46 à 56 % |
| Al₂O₃ | 12 à 17 % |
| B₂O₃ | 10 à 23 % |
| CaO | 9 à 15 % |
| MgO | 0,5 à 4 % |
| SrO | 2 à 7 % |
| BaO | 0 à 4 % |
| Na₂O + K₂O | ≤ 0,5 % |
| TiO₂ | 0 à 3 % |
***et en ce que*** ladite composition présente une viscosité correspondant à logη = 4 inférieure à 1140°C et que le coefficient de dilatation thermique du verre résultant est inférieur à 50.10⁻⁷/°C.

2. Composition de verre selon la revendication 1, ***caractérisée en ce que*** la somme SiO₂ + Al₂O₃ demeure égale ou inférieure à 65%.

3. Composition de verre selon l'une des revendications précédentes, ***caractérisée en ce que*** la teneur en CaO est comprise entre 10 et 14%.

4. Composition de verre selon l'une des revendications précédentes, ***caractérisée en ce que*** la somme SrO + BaO demeure égale ou inférieure à 4%.

5. Composition de verre selon l'une des revendications précédentes, ***caractérisée en ce que*** la teneur en Na₂O demeure inférieure à 0,2%.

6. Application de la composition de verre telle que définie par l'une quelconque des revendications précédentes à la fabrication d'un emballage par soufflage ou pressage d'une paraison dudit verre dans un moule.

7. Application de la composition de verre telle que définie par l'une quelconque des revendications 1 à 5 à la fabrication d'une feuille obtenue par découpe d'un ruban formé par nappage dudit verre sur un bain d'étain.

8. Substrat de verre, éventuellement revêtu d'une ou plusieurs couches électriquement actives, ***caractérisé en ce qu'***il est réalisé à partir d'une feuille de verre telle que définie par la revendication 7.

9. Vitrage anti-feu ***caractérisé en ce qu'***il comprend au moins une feuille de verre telle que définie par la revendication 7.

## Patentansprüche

1. Glaszusammensetzung, die hitzestabil und chemisch beständig ist, **dadurch gekennzeichnet, daß** sie folgende Bestandteile innerhalb von in Prozentanteilen der Kationen ausgedrückten nachstehenden Grenzen
| |
|---|
| SiO₂ 46 bis 56 %, |
| Al₂O₃ 12 bis 17 %, |
| B₂O₃ 10 bis 23 %, |
| CaO 9 bis 15 %, |
| MgO 0,5 bis 4 %, |
| SrO 2 bis 7%, |
| BaO 0 bis 4%, |
| Na₂O + K₂O ≤ 0,5 %, |
| TiO₂ 0 bis 3 % |
enthält, **und daß** die Zusammensetzung eine Viskosität aufweist, welche unter 1140 °C einem logη = 4 entspricht, und der Wärmeausdehnungskoeffizient des resultierenden Glases weniger als 50·10⁻⁷°C beträgt.

2. Glaszusammensetzung nach Anspruch 1, **dadurch gekennzeichnet, daß** die Summe aus SiO₂ + Al₂O₃ gleich oder unter 65 % bleibt.

3. Glaszusammensetzung nach einem der vorhergehenden Ansprüche, **dadurch gekennzeichnet, daß** der CaO-Gehalt 10 bis 14 % beträgt.

4. Glaszusammensetzung nach einem der vorhergehenden Ansprüche, **dadurch gekennzeichnet, daß** die Summe aus SrO + BaO gleich oder unter 4 % bleibt.

5. Glaszusammensetzung nach einem der vorhergehenden Ansprüche, **dadurch gekennzeichnet, daß** der Na₂O-Gehalt unter 0,2 % bleibt.

6. Verwendung der durch einen der vorhergehenden Ansprüche definierten Glaszusammensetzung zur Herstellung einer Verpackung durch Blasen oder Pressen eines Külbels aus diesem Glas in einer Form.

7. Verwendung der durch einen der Ansprüche 1 bis 5 definierten Glaszusammensetzung zur Herstellung einer Scheibe, die mittels Zuschneiden eines Bandes erhalten wird, das durch Ausbreiten des Glases auf einem Zinnbad gebildet worden ist.

8. Glassubstrat, das gegebenenfalls mit einer oder mehreren elektrisch aktiven Schichten überzogen ist, **dadurch gekennzeichnet, daß** es aus einer durch Anspruch 7 definierten Glasscheibe hergestellt ist.

9. Brandschutzverglasung, **dadurch gekennzeichnet, daß** sie mindestens eine durch Anspruch 7 definierte Glasscheibe enthält.

## Claims

1. Thermally stable and chemically resistant glass composition, characterized in that it comprises the following constituents, within the limits given hereinafter in cationic percentages:
| | |
|---|---|
| SiO₂ | 46 to 56% |
| Al₂O₃ | 12 to 17% |
| B₂O₃ | 10 to 23% |
| CaO | 9 to 15% |
| MgO | 0.5 to 4% |
| SrO | 2 to 7% |
| BaO | 0 to 4% |
| Na₂O + K₂O | ≤ 0.5% |
| TiO₂ | 0 to 3% |
and in that said composition has a viscosity corresponding to log η = 4 below 1140°C and that the thermal expansion coefficient of the resulting glass is below 50.10⁻⁷/°C.

2. Glass composition according to claim 1, characterized in that the sum SiO₂ + Al₂O₃ remains equal to or below 65%.

3. Glass composition according to one of the preceding claims, characterized in that the CaO content is between 10 and 14%.

4. Glass composition according to one of the preceding claims, characterized in that the sum SrO + BaO remains equal to or below 4%.

5. Glass composition according to one of the preceding claims, characterized in that the Na₂O content remains below 0.2%.

6. Application of the glass composition as defined by any one of the preceding claims to the production of a container by blowing or pressing a parison of said glass in a mould.

7. Application of the glass composition as defined by any one of the claims 1 to 5 to the production of a sheet obtained by cutting a ribbon formed by spraying said glass onto a tin bath.

8. Glass substrate, optionally coated with one or more electrically active layers, characterized in that it is produced from a glass sheet as defined by claim 7.

9. Fire-proof glazing, characterized in that it comprises at least one glass sheet as defined by claim 7.
